# EUROPÄISCHE PATENTSCHRIFT

(11) **EP 1 074 307 B1**
(45) Veröffentlichungstag und Bekanntmachung des Hinweises auf die Patenterteilung: **11.06.2008**
(21) Anmeldenummer: 00115013.5
(22) Anmeldetag: 24.07.2000
(51) Int. Cl.: B05C 5/02, B05C 9/14

(54) **Vorrichtung und Verfahren zum Aufbringen eines Kunststoffstrangs auf eine Unterlage**
Apparatus and method for applying a plastic strand to a substrate
Dispositif et procédé d'application d'un cordon de matière plastique sur un substrat

(30) Priorität: 06.08.1999 DE 19936730
(43) Veröffentlichungstag der Anmeldung: 07.02.2001
(73) Patentinhaber: Volkswagen Aktiengesellschaft, 38436 Wolfsburg (DE); SCA Schucker GmbH & Co., 75015 Bretten (DE)
(72) Erfinder: Müller-Rogait, Jochen, 38446 Wolfsburg (DE); Parr, Michael, 38114 Braunschweig (DE); Schucker, Josef, 75203 Königsbach-Stein (DE)
(74) Vertreter: Schneider, Henry

(56) Entgegenhaltungen:
- EP-A- 0 581 417
- DD-A- 259 157
- DE-U- 29 517 958
- US-A- 4 868 288
- US-A- 4 970 399
- US-A- 5 948 194
- PATENT ABSTRACTS OF JAPAN Bd. 1998, Nr. 03, 27. Februar 1998 (1998-02-27) & JP 9 285759 A (NORDSON KK), 4. November 1997 (1997-11-04)

## Beschreibung

Die Erfindung betrifft eine Vorrichtung zum Aufbringen eines Kunststoffstrangs auf eine Unterlage mit einem mit einem aushärtbaren flüssigem oder pastösem Kunststoff unter Druck beaufschlagbaren Düsenkopf, der eine vorzugsweise mit einer Ventilnadel verschließbare Auftragsdüse aufweist, wobei der Düsenkopf und die Unterlage mittels einer Roboteranordnung so relativ zueinander bewegbar sind, daß die Auftragsdüse entlang einer auf der Unterlage befindlichen vorgegebenen Bahn geführt wird. Weiter bezieht sich die Erfindung auf ein Verfahren zum Aufbringen eines Kunststoffstrangs auf eine Unterlage.

Vorrichtungen dieser Art werden beispielsweise in der Automobilindustrie zur Versiegelung von Bördelnähten verwendet. Die Aushärtung des Kunststoffstrangs erfolgt dort überwiegend durch thermische Aufheizung des Kunststoffmaterials. Der Kunststoffstrang soll die Bördelnaht gegen Wasserzutritt und Korrosion schützen. Bei dem bekannten Verfahren wird als nachteilig angesehen, daß die oft unvermeidlichen Lufteinschlüsse im Bereich der Bördelnaht bei der thermischen Aktivierung durch die sich ausdehnende Luft zur Blasenbildung führen. Die Blasen stören das Aussehen und erhöhen die Korrosionsgefahr.

Die EP 0 581 417 A1 zeigt eine Vorrichtung und ein Verfahren zum Aufbringen eines Kunststoffes auf eine Unterlage. Konkret geht es um das Aufbringen von Schriftzügen auf Bekleidungsstücke. Der EP 0 581 417 A1 ist nicht zu entnehmen, den aufgebrachten Kunststoff mittels UV-Licht photochemisch zu aktivieren.

Die US 4,970,399 zeigt eine Vorrichtung zum Verarbeiten von UV-härtbaren Reaktionsharzen, wobei dieses Harz durch einen Bestrahlungsraum (4) geführt wird und vor dem Verlassen des Bestrahlungsraumes eine Bestrahlung erfährt. Das in dem Bestrahlungsraum bestrahlte Reaktionsharz wird dann in eine Gießform geleitet.

Hierbei handelt es sich also um eine stationäre Einrichtung, wobei das mit UV-Licht bestrahlte Harz zum Versiegeln von elektronischen Bauelementen einsetzbar ist.

Ausgehend hiervon liegt der Erfindung die Aufgabe zugrunde, die Vorrichtung und das Verfahren der eingangs angegebenen Art dahingehend zu verbessern, daß eine Blasenbildung beim Aufbringen und Aushärten des Kunststoffstrangs vermieden wird.

Zur Lösung dieser Aufgabe werden die in den Ansprüchen 1, 21, und 30 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß der flüssige oder pastöse Kunststoff kurz vor und/oder nach dem Auftrag im Durchlauf mit UV-Licht bestrahlt und dabei fotochemisch zum Aushärten aktiviert wird.

Um dies zu erreichen, wird gemäß einer ersten Erfindungsalternative eine UV-Lichtquelle zur fotochemischen Aktivierung des Kunststoffs vorgeschlagen, die mindestens eine in Bewegungsrichtung hinter dem Düsenkopf in Richtung Unterlage weisende Lichtaustrittsstelle aufweist. Gemäß einer vorteilhaften oder alternativen Ausgestaltung der Erfindung kann eine UV-Lichtquelle zur fotochemischen Aktivierung des Kunststoffs vorgesehen werden, die mindestens eine in den Strömungsweg des flüssigen oder pastösen Kunststoffs vor der Auftragsdüse mündende Lichtaustrittsstelle aufweist.

Eine bevorzugte Ausgestaltung der Erfindung sieht vor, daß der Düsenkopf am Endglied der Roboteranordnung angeordnet und mit dieser relativ zur festgehaltenen Unterlage entlang der vorgegebenen Bahn bewegbar ist. Die UV-Lichtquelle kann dabei an der Roboteranordnung oder am Düsenkopf angeordnet und optisch mit der Lichtaustrittsstelle verbunden sein. Die Lichtquelle ist zweckmäßig über mindestens einen Quarzstab oder mindestens einen Lichtwellenleiter mit der mindestens einen Lichtaustrittsstelle verbunden.

Eine vorteilhafte Ausgestaltung der Erfindung sieht vor, daß die UV-Lichtquelle in einem in Richtung Unterlage offenen Lampengehäuse angeordnet ist. In dem Lampengehäuse kann eine das UV-Licht zur Applikationsstelle entlang der Bewegungsbahn lenkende Spiegelanordnung angeordnet sein. Weiter kann das Lampengehäuse einen mit seinem Rand gegen die Unterlage anlegbaren flexiblen Vorhang begrenzt sein. Der Vorhang weist vorteilhafterweise an seiner in Bewegungsrichtung vorderen und rückwärtigen Randpartie eine randoffene Ausnehmung auf, so daß der Kunststoffstrang beim Vorbeibewegen des Roboters nicht vom Vorhang berührt wird.

Eine weitere vorteilhafte Ausgestaltung der Erfindung sieht vor, daß die UV-Lichtquelle mindestens eine vorzugsweise auf der Roboteranordnung angeordnete UV-Lampe sowie eine von der UV-Lampe zur Wahlaustrittsstelle geführte flexible Lichtwellenleiteranordnung aufweist. Die Lichtwellenleiteranordnung umfaßt dabei zweckmäßig mehrere Lichtwellenleiter, deren zur Unterlage weisende Lichtaustrittsöffnungen in Bewegungsrichtung hinter dem Düsenkopf hintereinander angeordnet sind. Mindestens einer der Lichtwellenleiter kann dabei von einer UV-Lampe zu einer Lichtaustrittsstelle innerhalb des Düsenkopfes geführt werden.

Zur weiteren Beschleunigung des Aushärtungsvorgangs kann zusätzlich eine Heizvorrichtung zur Aufheizung des zugleich thermisch aktivierbaren Kunststoffs vorgesehen werden. Eine bevorzugte Ausgestaltung der Erfindung sieht dabei vor, daß die Heizvorrichtung ein im Düsenkopf angeordnetes Heizelement aufweist. Weiter kann die Heizvorrichtung ein vorzugsweise an der Roboteranordnung angeordnetes Heißluftgebläse aufweisen, das mindestens eine vorzugsweise am Endglied der Roboteranordnung angeordnete, in Richtung Unterlage weisende Heißluftdüse aufweisen kann. Die mindestens eine Heißluftdüse kann dabei in Bewegungsrichtung hinter der Auftragsdüse angeordnet und auf den bereits aufgetragenen Klebstoffstrang gerichtet werden. Grundsätzlich ist es möglich, auch eine Heißluftdüse in Bewegungsrichtung vor der Auftragsdüse anzuordnen, und damit die Unterlage vor dem Auftragen des Klebstoffstrangs auf eine höhere Temperatur zu bringen.

Weiter kann die Heizvorrichtung ein die Unterlage zumindest entlang der Bewegungsbahn aufheizendes Heizaggregat aufweisen, das beispielsweise als Induktionsheizer, Infrarotheizer oder NIR-Heizer (Near IR) ausgebildet sein kann.

Verfahrensmäßig wird mit den erfindungsgemäßen Maßnahmen erreicht, daß der flüssige oder pastöse Kunststoff kurzzeitig vor dem Auftrag und/oder nach dem Auftrag auf die Unterlage mit UV-Licht bestrahlt und dabei fotochemisch zum Aushärten gebracht wird.

Im ersteren Falle wird der flüssige oder pastöse Kunststoff im Durchlauf entlang einem Strömungsweg mit dem UV-Licht über ein Lichtfenster bestrahlt, das zugleich von dem vorbeiströmenden flüssigen oder pastösen Kunststoff benetzt und gereinigt wird. Die Bestrahlung kann dabei über einen eintrittsseitig mit UV-Licht beaufschlagten Quarzstab oder Lichtwellenleiter erfolgen.

Wenn der flüssige oder pastöse Kunststoff nach dem Auftrag auf die Unterlage mit UV-Licht bestrahlt wird, so kann dies durch eine entlang der Bewegungsbahn mitgeführte UV-Lichtquelle im Vorbeilauf erfolgen.

Eine Beschleunigung der Aushärtung läßt sich dadurch erzielen, daß der zugleich thermisch aktivierbare flüssige oder pastöse Kunststoff vor oder nach der UV-Bestrahlung aufgeheizt wird.

Im folgenden wird die Erfindung anhand eines in der Zeichnung in schematischer Weise dargestellten Ausführungsbeispiels näher erläutert. Es zeigen
- Fig. 1a: und b einen Roboter für die Bördelnahtversiegelung in zwei verschiedenen schaubildlichen Darstellungen;
- Fig. 2: eine gegenüber Fig. 1 abgewandelte Ausführungsform eines Roboters für die Bördelnahtversiegelung;
- Fig. 3a: einen Schnitt durch den am Endglied des Roboters angelenkten Düsenkopf der Auftragvorrichtung;
- Fig. 3b: eine Seitenansicht der Auftragsdüse in gegenüber Fig. 3a um 90° gedrehter vergrößerter Darstellung.

Die in der Zeichnung dargestellte Roboteranordnung 10 ist vor allem zur Versiegelung von verklebten Bördelnähten 12 von Kraftfahrzeugteilen 14 bestimmt. Der Roboter 10 trägt zu diesem Zweck an seinem Endglied 16 einen Düsenkopf 18, der über einen flexiblen Schlauch mit einem Dichtstoff aus flüssigem oder pastösem Reaktionskunstharz beaufschlagbar ist und der eine mit einer Ventilnadel 22 verschließbare Auftragsdüse 24 aufweist. Die Betätigung der Ventilnadel 22 erfolgt über eine Zylinder-Kolbenanordnung 48, deren Kolben 50 in der Offenstellung über die Robotersteuerung entgegen der Kraft einer Schließfeder 51 pneumatisch nach oben und in der Schließstellung unter der Einwirkung der Schließfeder 51 nach unten verschoben wird.

Der Düsenkopf ist über den Roboter relativ zur Unterlage 14 entlang einer vorgegebenen Bahn (Bördelrand 12) in Richtung des Pfeils 30 relativ zur Unterlage (KFZ-Teil 14) bewegbar und bringt über die Auftragsdüse einen Kunststoffstrang 32 auf die Unterlage 14 auf.

Zu diesem Zweck weist der Düsenrand 28 an seinen in und entgegen der Bewegungsrichtung 30 weisenden Randpartien 34 je eine mit der Düsenöffnung 26 kommunizierende, zur Unterlage 14 hin randoffene formgebende Ausnehmung 36 auf, während er an seinen einander gegenüberliegenden, quer zur Bewegungsrichtung 30 weisenden Randpartien 38 gegen die Unterlage 14 andrückbar ist. Um Unebenheiten auf der Unterlage entlang der Bewegungsbahn ausgleichen zu können, ist der Düsenkopf 18 um eine im Abstand von der Auftragsdüse 24 quer zur Bewegungsrichtung ausgerichtete Achse 40 schwenkbar am Endglied 16 der Roboteranordnung 10 angelenkt. Der Düsenkopf 18 weist zu diesem Zweck einen Ausleger 42 auf, mit der er an einem schräg nach unten über das Endglied 16 überstehenden Kragarm 44 angelenkt ist. Die Feder ist als zwischen dem Ausleger 42 und dem Kragarm 44 eingespannte Druckfeder 46 ausgebildet.

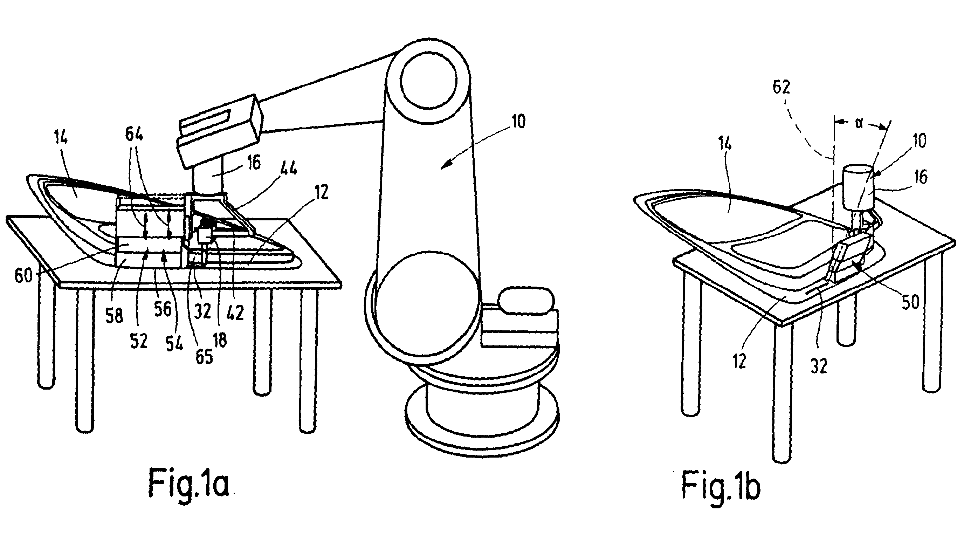

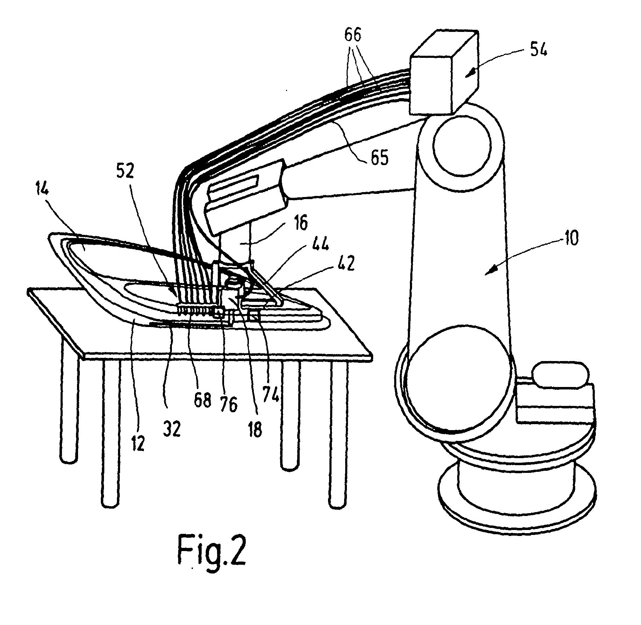

Wie aus den Fig. 1 und 2 zu ersehen ist, ist am Endglied 16 des Roboters 10 zusätzlich eine UV-Lichtquelle 52 angeordnet, die sich in Bewegungsrichtung 30 hinter dem Düsenkopf 18 befindet, und die die Aufgabe hat, den Aushärtevorgang des auf der Unterlage 14 aufgetragenen Dichtstoffstrangs 32 fotochemisch zu aktivieren.

Die in Fig. 1a und b gezeigte UV-Lichtquelle 52 ist in einem in Richtung Unterlage 14 offenen Lampengehäuse 54 angeordnet, das durch einen mit seinem Rand 56 gegen die Unterlage anlegbaren flexiblen Vorhang 58 begrenzt ist. Der Vorhang weist im Bereich seiner bezüglich der Bewegungsrichtung 30 vorderen und rückwärtigen Randpartie nicht dargestellte randoffene Ausnehmungen für den berührungsfreien Durchtritt des Dichtstoffstrangs 32 auf. Weiter ist in dem Lampengehäuse 54 eine das UV-Licht zu einer Applikationsstelle entlang der Bewegungsbahn lenkende Spiegelanordnung 60 vorgesehen. Wie aus Fig. 1b zu ersehen ist, ist das Lampengehäuse 54 gegenüber einer Vertikalebene 62 um einen vorzugsweise über die Robotersteuerung einstellbaren Winkel α geneigt oder schwenkbar am Roboter-Endglied angeordnet. Außerdem ist es in Richtung der Doppelpfeile 64 vertikal heb- und senkbar am Endglied 16 befestigt.

Von der UV-Lichtquelle 52 ist zusätzlich ein Lichtwellenleiter 65 abgezweigt, der mit seiner Lichtaustrittsstelle in den Strömungsweg des flüssigen oder pastösen Kunststoffs innerhalb des Düsenkopfes 18 mündet. Mit dieser Maßnahme wird erreicht, daß das flüssige oder pastöse Kunststoffmaterial vor dem Austritt aus der Auftragsdüse 24 bereits fotochemisch aktiviert wird, so daß die Härtungsreaktion während oder alsbald nach dem Auftrag auf den Bördelrand 12 einsetzen kann.

Bei der in Fig. 2 gezeigten Ausführungsvariante besteht die UV-Lichtquelle 52 aus einer in größerem Abstand vom Endglied 16 auf der Roboteranordnung 10 angeordnetem Lampengehäuse 54 mit mindestens einer UV-Lampe sowie mehreren vom Lampengehäuse 54 zu einem endgliedfesten Halter 68 geführten Lichtwellenleitern 66. Die Lichtaustrittsstellen der Lichtwellenleitern 66 weisen nach unten in Richtung Bördelrand 12. Sie sind in Bewegungsrichtung hinter dem Düsenkopf 18 hintereinander an dem Halter 68 fixiert.

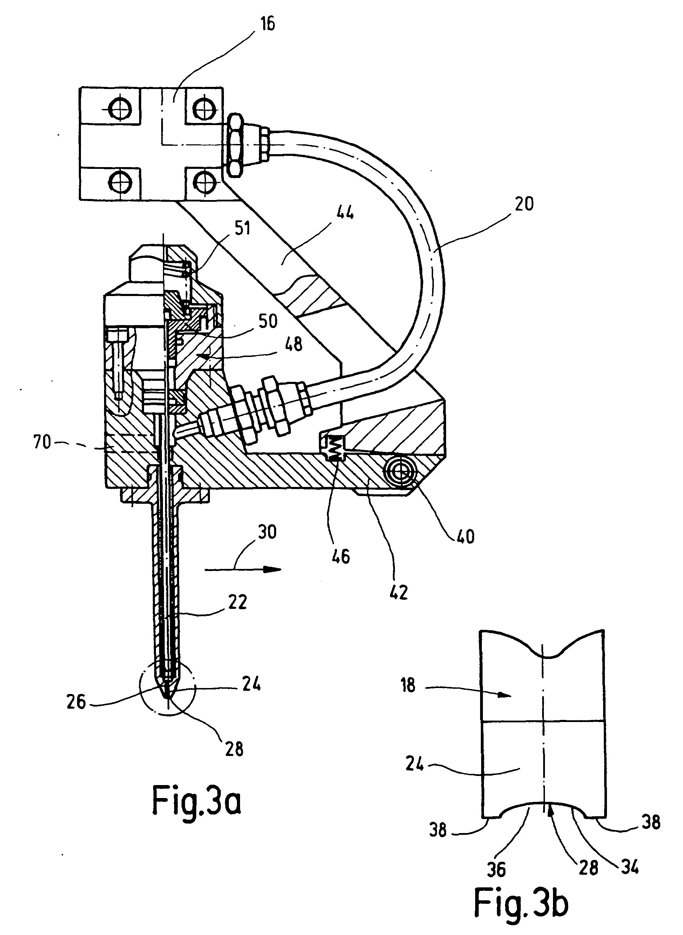

Bei den Ausführungsbeispielen nach Fig. 2 und 3a ist zusätzlich eine Heizvorrichtung zur Aufheizung des zugleich thermisch aktivierbaren Kunststoffs vorgesehen. Die Heizvorrichtung weist dabei ein im Düsenkopf angeordnetes Heizelement 70 auf, das elektrisch aufheizbar ist und über das das vorbeiströmende Kunststoffmaterial auf eine erhöhte Temperatur gebracht und thermisch aktiviert wird.

Weiter ist an der in Fig. 2 gezeigten Roboteranordnung ein Heizaggregat angeordnet, das zwei in Richtung Unterlage weisende, beispielsweise als Infrarotheizer oder Heißluftdüsen ausgebildete Heizelemente 74,76 aufweist. Das Heizelement 74 ist dabei in Bewegungsrichtung vor der Auftragsdüse 24 angeordnet. Es heizt die Unterlage 14 im Bereich des Bördelrands 12 vor, damit der Klebstoffstrang beim Auftreffen auf die Unterlage aufgeheizt und thermisch aktiviert wird. Das Heizelement 76 ist in Bewegungsrichtung hinter der Auftragsdüse angeordnet und auf den bereits aufgetragenen Klebstoffstrang gerichtet.

Grundsätzlich ist es auch möglich, die Unterlage im Bereich der Bewegungsbahn induktiv aufzuheizen.

Zusammenfassend ist folgendes festzuhalten: Die Erfindung bezieht sich auf eine Vorrichtung und ein Verfahren zum Aufbringen eines Klebstoffstrangs auf eine Unterlage. Die Vorrichtung und das Verfahren sind beispielsweise in der Autoindustrie zum Versiegeln von Bördelnähten 12 an Blechteilen 14 bestimmt. Die Vorrichtung umfaßt einen vorzugsweise am Endglied 16 einer Roboteranordnung 10 befestigbaren, relativ zur Unterlage 14 entlang einer vorgegebenen Bahn 12 bewegbaren Düsenkopf 18, der mit einem aushärtbaren flüssigen oder pastösen Kunststoff unter Druck beaufschlagbar ist und der eine vorzugsweise mit einer Ventilnadel 22 verschließbare Auftragsdüse 24 aufweist. Um eine blasenfreie Aushärtung zu ermöglichen, wird gemäß der Erfindung eine UV-Lichtquelle zur fotochemischen Aktivierung des Kunststoffs vorgeschlagen, die mindestens eine am Endglied 16 angeordnete, in Bewegungsrichtung hinter dem Düsenkopf 18 in Richtung Unterlage 14 weisende Lichtaustrittsstelle oder alternativ dazu mindestens eine vor der Auftragsdüse 24 in den Strömungsweg des flüssigen oder pastösen Kunststoffs mündende Lichtaustrittsstelle aufweist.

## Patentansprüche

1. Vorrichtung zum Aufbringen eines Kunststoffstrangs auf eine Unterlage mit einem mit einem verfestigten flüssigen oder pastösen Kunststoff unter Druck beaufschlagbaren Düsenkopf (18), der eine vorzugsweise verschließbare Auftragsdüse (24) aufweist, wobei Düsenkopf (18) und Unterlage (14) mittels einer Roboteranordnung (10) so relativ zueinander bewegbar sind, daß die Auftragsdüse (24) entlang einer vorgegebenen Bahn (12) entlang der Unterlage (14) geführt ist, **gekennzeichnet durch,** eine UV-Lichtquelle (52) zur fotochemischen Aktivierung des Kunststoffs, die mindestens eine in Richtung Unterlage (14) und/oder in Richtung aus dem Düsenkopf (18) ausgebrachtem Kunststoff weisende Lichtaustrittsstelle aufweist, wobei die UV-Lichtquelle (52), mindestens eine in Bewegungsrichtung hinter dem Düsenkopf (18) angeordneten, in den Strömungsweg des flüssigen oder pastösen Kunststoffs mündende Lichtaustrittsstelle aufweist.

2. Vorrichtung nach Anspruch 1, **dadurch gekennzeichnet, daß** der Düsenkopf (18) am Endglied (16) der Roboteranordnung (10) angeordnet und mit dieser relativ zur Unterlage (14) entlang der vorgegebenen Bahn (12) bewegbar ist.

3. Vorrichtung nach einem der vorhergehenden Ansprüche, **dadurch gekennzeichnet, daß** die UV-Lichtquelle (52) an der Roboteranordnung (10) oder am Düsenkopf (18) angeordnet und optisch mit der Lichtaustrittsstelle verbunden ist.

4. Vorrichtung nach einem der Ansprüche 1 bis 3, **dadurch gekennzeichnet, daß** die UV-Lichtquelle über mindestens einen Lichtwellenleiter (65,66) mit der mindestens einen Lichtaustrittsstelle verbunden ist.

5. Vorrichtung nach einem der Ansprüche 1 bis 4, **dadurch gekennzeichnet, daß** die UV-Lichtquelle (52) in einem in Richtung Unterlage und/oder in Richtung aus dem Düsenkopf (18) ausgebrachtem Kunststoff offenen Lampengehäuse (54) angeordnet ist.

6. Vorrichtung nach Anspruch 5, **dadurch gekennzeichnet, daß** in dem Lampengehäuse (54) eine das UV-Licht zu einer Applikationsstelle entlang der Bewegungsbahn (12) lenkende Spiegelanordnung (60) angeordnet ist.

7. Vorrichtung nach Anspruch 5 oder 6, **dadurch gekennzeichnet, daß** das Lampengehäuse (54) durch einen mit seinem Rand (56) gegen die Unterlage (14) anlegbaren, flexiblen Vorhang (58) begrenzt ist.

8. Vorrichtung nach Anspruch 7, **dadurch gekennzeichnet, daß** der Vorhang (58) an seinem in Bewegungsrichtung (30) vorderen und rückwärtigen Randpartien eine randoffene Ausnehmung aufweist.

9. Vorrichtung nach Anspruch 4, **dadurch gekennzeichnet, daß** die UV-Lichtquelle (52) eine von der UV-Lampe zur Lichtaustrittsstelle geführte flexible Lichtwellenleiteranordnung (66) aufweist.

10. Vorrichtung nach Anspruch 9, **dadurch gekennzeichnet, daß** die Lichtwellenleiteranordnung mehrere Lichtwellenleiter (66) umfaßt, deren zur Unterlage (14) weisende Lichtaustrittsöffnungen in Bewegungsrichtung des Düsenkopfes (18) überwiegend hintereinander angeordnet sind.

11. Vorrichtung nach einem der Ansprüche 1 bis 10, **gekennzeichnet durch** mindestens einen Lichtwellenleiter (65), der von der UV-Lichtquelle zu einer Lichtaustrittsstelle innerhalb des Düsenkopfes (18) führt.

12. Vorrichtung nach einem der Ansprüche 1 bis 11, **gekennzeichnet durch** eine Heizvorrichtung zur Aufheizung des Kunststoffs.

13. Vorrichtung nach Anspruch 12, **dadurch gekennzeichnet, daß** die Heizvorrichtung ein im Düsenkopf (18) angeordnetes Heizelement aufweist.

14. Vorrichtung nach Anspruch 12 oder 13, **dadurch gekennzeichnet, daß** die Heizvorrichtung ein vorzugsweise an der Roboteranordnung (10) angeordnetes Heißluftgebläse aufweist.

15. Vorrichtung nach einem der Ansprüche 12 bis 14, **dadurch gekennzeichnet, daß** die Heizvorrichtung mindestens ein vorzugsweise am Endglied (16) der Roboteranordnung (10) angeordnetes, in Richtung Unterlage (14) weisendes Heizelement (74,76) aufweist.

16. Vorrichtung nach Anspruch 15, **dadurch gekennzeichnet, daß** das mindestens eine Heizelement (74) in Bewegungsrichtung hinter der Auftragsdüse (24) angeordnet ist.

17. Vorrichtung nach Anspruch 15 oder 16, **dadurch gekennzeichnet, daß** das mindestens eine Heizelement (74) in Bewegungsrichtung (30) vor der Auftragsdüse (24) angeordnet ist.

18. Vorrichtung nach einem der Ansprüche 15 bis 17, **dadurch gekennzeichnet, daß** das Heizelement (74,76) aus der Gruppe Heißluftdüse, IR- oder NIR-Heizer ausgebildet ist.

19. Vorrichtung nach einem der Ansprüche 12 bis 18, **dadurch gekennzeichnet, daß** die Heizvorrichtung ein die Unterlage (14) zumindest entlang der Bewegungsbahn (12) aufheizendes Heizaggregat aufweist.

20. Vorrichtung nach Anspruch 19, **dadurch gekennzeichnet, daß** das Heizaggregat als Induktionsheizer ausgebildet ist.

21. Verfahren zum Aufbringen eines Kunststoffstrangs auf eine Unterlage, bei welchem der Kunststoff in flüssigem oder pastösem Zustand aus einer entlang der Unterlage geführten Düse auf die Unterlage aufgetragen und dort verfestigt wird, **dadurch gekennzeichnet, daß** der flüssige oder pastöse Kunststoff unmittelbar vor und/oder unmittelbar nach dem Auftrag auf die Unterlage mit UV-Licht bestrahlt und dabei fotochemisch zum Verfestigen aktiviert wird, wobei das UV-Licht aus einer in Bewegungsrichtung hinter der Düse angeordneten Lichtaustrittsstelle auf den flüssigen oder pastösen Kunststoff gerichtet wird und das UV-Licht mit der Düse geführt wird.

22. Verfahren nach Anspruch 21, **dadurch gekennzeichnet, daß** der flüssige oder pastöse Kunststoff im Durchlauf entlang einem Strömungsweg mit dem UV-Licht bestrahlt wird.

23. Verfahren nach Anspruch 22, **dadurch gekennzeichnet, daß** das UV-Licht über ein Lichtfenster in den Strömungsweg des flüssigen oder pastösen Kunststoffs eingeleitet wird.

24. Verfahren nach Anspruch 23, **dadurch gekennzeichnet, daß** das Lichtfenster durch den vorbeiströmenden flüssigen oder pastösen Kunststoff benetzt und gereinigt wird.

25. Verfahren nach einem der Ansprüche 22 bis 24, **dadurch gekennzeichnet, daß** das UV-Licht über einen Lichtwellenleiter zur Lichtaustrittsstelle geleitet wird.

26. Verfahren nach einem der Ansprüche 21 bis 25, **dadurch gekennzeichnet, daß** der flüssige oder pastöse Kunststoff durch eine entlang einer Bewegungsbahn der Düse geführte UV-Lichtquelle im Vorbeibewegen mit UV-Licht bestrahlt wird.

27. Verfahren nach einem der Ansprüche 21 bis 26, **dadurch gekennzeichnet, daß** der flüssige oder pastöse Kunststoff im erwärmten Zustand mit UV-Licht bestrahlt wird.

28. Verfahren nach einem der Ansprüche 21 bis 27, **dadurch gekennzeichnet, daß** der flüssige oder pastöse Kunststoff vor dem Auftrag auf die Unterlage aufgeheizt wird.

29. Verfahren nach einem der Ansprüche 21 bis 28, **dadurch gekennzeichnet, daß** der flüssige oder pastöse Kunststoff auf eine zumindest im Bereich der Bewegungsbahn vorgeheizte Unterlage aufgetragen und dabei aufgeheizt wird.

30. Verwendung der Vorrichtung nach einem der Ansprüche 1 bis 20 und des Verfahrens nach einem der Ansprüche 23 bis 29 zum Aufbringen eines Dichtstoffs auf eine Bördelnaht an zwei Blechteilen.

31. Verwendung nach Anspruch 30, **dadurch gekennzeichnet, daß** sich zwischen den Blechteilen im Bereich der Bördelnaht ein vorzugsweise thermisch verfestigbarer Klebstoff befindet.

## Claims

1. Apparatus for applying a plastic strand to: a substrate, comprising a nozzle head (18) which can receive a solidified, liquid or pasty plastic under pressure and has a preferably closable application nozzle (24), the nozzle head (18) and the substrate (14) being movable in relation to each other by means of a robot arrangement (10) in such a way that the application nozzle (24) is guided along the substrate (14) along a predetermined path (12), **characterized by** a UV light source (52) for the photochemical activation of the plastic, which has at least one light exit facing in the direction of the substrate (14) and/or in the direction of plastic emanating from the nozzle head (18), the UV light source (52) having at least one light exit point arranged downstream of the nozzle head (18) in the direction, of movement and opening out into the flow path of the liquid or pasty plastic.

2. Apparatus according to Claim 1, **characterized in that** the nozzle head (18) is arranged on the end element (16) of the robot arrangement (10) and is movable with the latter in relation to the substrate (14) along the predetermined path (12).

3. Apparatus according to one of the preceding claims, **characterized in that** the UV light source (52) is arranged on the robot arrangement (10) or on the nozzle head (18) and is optically connected to the light exit point.

4. Apparatus according to one of Claims 1 to 3, **characterized in that** the UV light source is connected to the at least one light exit point by means of at least one optical waveguide (65, 66).

5. Apparatus according to one of Claims 1 to 4, **characterized in that** the UV light source (52) is arranged in a lamp housing (54) that is open in the direction of the substrate and/or in the direction of plastic emanating from the nozzle head (18).

6. Apparatus according to Claim 5, **characterized in that** a mirror arrangement (60) directing the UV light along the path of movement (12) to an application point is arranged in the lamp housing (54).

7. Apparatus according to Claim 5 or 6, **characterized in that** the lamp housing (54) is bounded by a flexible curtain (58), which can be placed with its edge (56) against the substrate (14).

8. Apparatus according to Claim 7, **characterised in that** the curtain (58) has at its edge portions at the front and rear in the direction of movement (30) a recess that is open at the edge.

9. Apparatus according to Claim 4, **characterized in that** the UV light source (52) has a flexible optical waveguide arrangement (66) led from the UV lamp to the light exit point.

10. Apparatus according to Claim 9, **characterized in that** the optical waveguide arrangement comprises a number of optical waveguides (66), the light exit openings of which that are facing the substrate (14) being arranged predominantly one behind the other in the direction of movement of the nozzle head (18).

11. Apparatus according to one of Claims 1 to 10, **characterized by** at least one optical waveguide (65), which leads from the UV light source to a light, exit point inside the nozzle head (18).

12. apparatus according to one of Claims 1 to 11, **characterized by** a heating device for heating up the plastic.

13. Apparatus according to Claim 12, **characterized in that** the heating device has a heating element arranged in the nozzle head (18).

14. Apparatus according to Claim 12 or 13, **characterized in that** the heating device has a hot-air blower, preferably arranged on the robot arrangement (10).

15. Apparatus according to one of Claims 12 to 14, **characterized in that** the heating device has at least one heating element (74, 76), preferably arranged on the end element (16) of the robot arrangement (10) and facing in the direction of the substrate (14).

16. Apparatus according to Claim 15, **characterized in that** the at least one heating element (74) is arranged downstream of the application nozzle (24) in the direction of movement.

17. Apparatus according to Claim 15 or 16, **characterized in that** the at least one heating element (74) is arranged upstream of the application nozzle (24) in the direction of movement (30).

18. Apparatus, according to one of Claims 15 to 17 **characterized in that** the heating element (74, 76) is formed from the group comprising a hot-air nozzle, an IR heater and an NIR heater.

19. Apparatus according to one of Claims 12 to 18, **characterised in that** the heating device has a heating unit heating up the substrate (14) at least along the path of movement (12).

20. Apparatus according to Claim 19, **characterized in that** the heating unit is formed as an induction heater.

21. Method for applying a plastic strand to a substrate, in which the plastic is applied to the substrate in a liquid or pasty state from a nozzle guided along the substrate and is made to set on the said substrate, **characterized in that** the liquid or pasty plastic is irradiated with UV light directly before and/or directly after application to the substrate and is thereby photochemically activated to make it set, the UV light being directed onto the liquid or pasty plastic from a light exit point arranged downstream of the nozzle in the direction of movement and the UV light being guided by the nozzle.

22. Method according to Claim 21, **characterized in that** the liquid or pasty plastic is irradiated with the UV light as it passes along a flow path.

23. Method according to Claim 22, **characterized in that** the UV light is introduced into the flow path of the liquid or pasty plastic by way of a light window.

24. Method according to Claim 23, **characterized in that** the light window is wetted and cleaned by the liquid or pasty plastic flowing past.

25. Method according to one of Claims 22 to 24, **characterized in that** the UV light is directed to the light exit point by way of an optical waveguide.

26. Method according to one of Claims 21 to 25, **characterised in that** the liquid or pasty plastic is irradiated with UV light by a UV light source guided along a path of movement of the nozzle as it passes by.

27. Method according to one of Claims 21 to 26, **characterized in that** the liquid or pasty plastic is irradiated with UV light in the warmed state.

28. Method according to one of Claims 21 to 27, **characterized in that** the liquid or pasty plastic is heated up before application to the substrate.

29. Method according to one of Claims 21 to 28, **characterized in that** the liquid or pasty plastic is applied to a substrate preheated at least in the region of the path of movement, and is thereby heated up.

30. Use of the apparatus according to one of Claims 1 to 20 and of the method according to one of Claims 23 to 29 for applying a sealant to a flanged seam on two sheet-metal parts.

31. Use according to Claim 30, **characterised in that** a preferably thermosetting adhesive is located between the sheet-metal parts in the region of the flanged seam.

## Revendications

1. Dispositif pour appliquer un cordon de matière synthétique sur un substrat, lequel dispositif présente une tête d'ajutage (18) sur laquelle une matière synthétique liquide ou pâteuse solidifiée peut être appliquée sous pression et présente un ajutage d'application (24) de préférence apte à être fermé, la tête d'ajutage (18) et le substrat (14) pouvant être déplacés l'un par rapport, à l'autre au moyen d'un système de robot (10) de telle sorte que l'ajutage d'application (24) soit guidé le long d'un parcours prédéterminé (12) le long du substrat (14), **caractérisé par** une source (52) de lumière UV qui active photochimiquement la matière synthétique et qui présente au moins un emplacement Ce sortie de lumière orienté en direction du substrat (14) et/ou en direction de la matière synthétique qui sort de la tête d'ajutage (18), la source (52) de lumière UV présentant au moins un emplacement de sortie de lumière disposé en arrière de la tête d'ajutage (18) dans la direction, du déplacement et qui débouche dans le parcours d'écoulement de la matière synthétique liquide ou pâteuse.

2. Dispositif selon la revendication 1, **caractérisé en ce que** la tête d'ajutage (18) est disposée sur l'organe d'extrémité (16) du système de robot (10) et peut être déplacée avec ce dernier par rapport au substrat (14) le long du parcours prédéterminé (12).

3. Dispositif selon l'une des revendications précédentes, **caractérisé en ce que** la source (52') de lumière UV est disposée sur le système de robot (10) ou sur la tête d'ajutage (18) et est reliée optiquement à l'emplacement de sortie de lumière.

4. Dispositif selon l'une des revendications 1 à 3, **caractérisé en ce que** la source de lumière UV est reliée a l'emplacement ou aux emplacements de sortie de lumière par au moins un guide (65, 66) d'onde lumineuse,

5. Dispositif selon l'une des revendications 1 à 4, **caractérisé en ce que** la source (52) de lumière UV est disposée dans un bottier de lampe (54) ouvert en direction du substrat et/ou en direction de la matière synthétique qui sort de la tête d'ajutage (18).

6. Dispositif selon la revendication 5, **caractérisé en ce qu'**un système de miroir (60) qui oriente la lumière UV vers un emplacement d'application situé sur le parcours de déplacement (12) est disposé dans le boîtier de lampe (54).

7. Dispositif selon les revendications 5 ou 6, **caractérisé en ce que** le boîtier de lampe (54) est délimité par un rideau flexible (58) dont le bord (56) peut être placé sur le substrat (14).

8. Dispositif selon la revendication 7, **caractérisé en ce que** sur sa bordure située en avant et sa bordure située en arrière dans la direction du déplacement (30), le rideau (58) présente une découpe à bords ouverts.

9. Dispositif selon la revendication 4, **caractérisé en ce que** la source (52) de lumière UV présente un système flexible (66) de guide d'onde lumineuse guidé par la lampe UV vers l'emplacement de sortie de lumière.

10. Dispositif selon la revendication 9, **caractérisé en ce que** le système de guide d'onde lumineuse comprend plusieurs guides (66) d'onde lumineuse dont les ouvertures de sortie de lumière tournées vers le substrat (14) sont disposées principalement les unes derrière les autres dans la direction du déplacement de la tête d'ajutage (18).

11. Dispositif selon l'une des revendications 1 à 10, **caractérisé par** au moins un guide (65) d'onde lumineuse qui relie la source de lumière UV à un emplacement de sortie de lumière situé à l'intérieur de la tête d'ajutage (18).

12. Dispositif selon l'une des revendications 1 à 11, **caractérise par** un dispositif de chauffage qui chauffe la matière synthétique.

13. Dispositif selon la revendication 12, **caractérisé en ce que** le dispositif de chauffage présente un élément chauffant disposé dans la tête d'ajutage (18) .

14. Dispositif selon les revendications 12 ou 13, **caractérisé en ce que** le dispositif de chauffage présente un ventilateur d'air de chauffage disposé de préférence sur le système de robot (10).

15. Dispositif selon l'une des revendications 12 à 14, **caractérisé en ce que** le dispositif de chauffage présente au moins un élément chauffant (74, 76) disposé de préférence sur l'organe d'extrémité (16) du système de robot (10) et tourné en direction du substrat (14).

16. 1 Dispositif selon la revendication 15, **caractérisé en ce que** le ou les éléments chauffants (74) sont disposés derrière l'ajutage d'application (24) dans la direction du déplacement.

17. Dispositif selon les revendications 15 ou 16, **caractérisé en ce que** le ou les éléments chauffants (74) sont disposés en avant de l'ajutage d'application (24) dans la direction de déplacement (30).

18. Dispositif selon l'une des revendications 15 à 17, **caractérise en ce que** l'élément chauffant (74, 76) est sélectionné dans l'ensemble constitué des tuyères à air chaud, des éléments chauffants à IR et des éléments chauffants à NIR.

19. Dispositif selon l'une des revendications 12 à 18, **caractérisé en ce que** le dispositif de chauffage présente un ensemble de chauffage qui chauffe le substrat (14) au moins le long du parcours de déplacement (12).

20. Dispositif selon la revendication 19, **caractérisé en ce que** le système de chauffage est configuré comme système de chauffage à induction.

21. Procédé d'application d'un cordon de matière synthétique sur un substrat, dans lequel la matière synthétique est appliquée à l'état liquide ou pâteux sur le substrat par un ajutage guidé le long du substrat et y est solidifiée, **caractérisé en ce que** la matière synthétique liquide ou pâteuse est irradiée par de la lumière UV directement avant et/ou directement après son application sur le substrat et est ainsi activée photochimiquement de manière à se solidifier, la lumière UV étant dirigée sur la matière synthétique liquide ou pâteuse depuis un emplacement de sortie de lumière disposé derrière l'ajutage dans la direction du déplacement, la lumière UV étant guidée en même temps que l'ajutage.

22. Procédé selon la revendication 21, **caractérisé en ce que** la matière synthétique liquide ou pâteuse est irradiée par de la lumière UV pendant qu'elle s'écoule sur un parcours d'écoulement.

23. Procédé selon la revendication 22, **caractérisé en ce que** la lumière UV est amenée par une fenêtre de lumière dans le parcours d'écoulement de la matière synthétique liquide ou pâteuse.

24. Procédé selon la revendication 23, **caractérisé en ce que** la fenêtre à lumière est mouillée et nettoyée par la matière synthétique liquide ou pâteuse qui s'y écoule.

25. Procédé selon l'une des revendications 22 à 24, **caractérisé en ce que** la lumière UV est amenée sur l'emplacement de sortie de lumière par un guide d'onde lumineuse.

26. Procédé selon l'une des revendications 21 à 25, **caractérisé en ce que** la matière synthétique liquide ou pâteuse est irradiée par une source de lumière UV guidée le long d'un parcours de déplacement de l'ajutage pendant son déplacement.

27. Procédé selon l'une des revendications 21 à 26, **caractérisé en ce que** la matière synthétique liquide ou pâteuse est irradiée à l'état chaud par la lumière UV.

28. Procédé selon l'une des revendications 21 à 27, **caractérisé en ce que** la matière synthétique liquide ou pâteuse est chauffée avant d'être appliquée sur le substrat.

29. Procédé selon l'une des revendications 21 à 28, **caractérisé en ce que** la matière synthétique liquide ou pâteuse est appliquée sur un substrat préchauffé au moins dans la zone du parcours de déplacement et est ainsi chauffée.

30. Utilisation du dispositif selon l'une des revendications 1 à 20 et du procédé selon l'une des revendications 23 à 29 pour appliquer une substance d'étanchéité sur un rebord de deux pièces de tôle.

31. Utilisation selon la revendication 30, **caractérisée en ce qu'**un adhésif durc-issable de préférence thermiquement est situé entre les pièces de tôle dans la zone du rebord.
